# EUROPEAN PATENT SPECIFICATION

(11) **EP 3 450 863 B1**
(45) Date of publication and mention of the grant of the patent: **07.06.2023**
(21) Application number: 17189051.0
(22) Date of filing: 01.09.2017
(51) Int. Cl.: F24C 15/20, F24F 1/0035

(54) **AIR SUPPLY DEVICE**
LUFTZUFUHRVORRICHTUNG
DISPOSITIF D'ALIMENTATION EN AIR

(43) Date of publication of application: 06.03.2019
(73) Proprietor: Enervent Zehnder Oy, 06150 Porvoo (FI)
(72) Inventor: Tuutti, Jari, 07500 Askola (FI); Lalu, Tero, 06100 Porvoo (FI); Palmgren, Tom, 06200 Porvoo (FI)
(74) Representative: Papula Oy

(56) References cited:
- WO-A1-03/014626
- DE-A1-102005 033 224
- JP-A- 2016 125 794
- US-A- 4 350 504
- US-A- 5 918 589

## Description

### TECHNICAL FIELD

The present invention relates to an air supply device for extracting exhaust air from a room and leading fresh air into the room.

### BACKGROUND

Air supply devices are designed for and assembled into buildings which have exhaust air ducts for removing exhaust air out of the building and supply air ducts for conducting fresh supply air into the building. The building may also comprise a cooker hood air duct for removing cooker hood air out of the building. The cooker hood air duct may connected to the air supply device, which extracts the cooker hood air out of the room and conducts the cooker hood air further into the exhaust air duct, or the cooker hood air duct may be directly connected to the open air outside the building. Therefore, the air supply device manufacturers have had different kind of air supply devices for different kind of air duct systems. DE 10 2005 033224 A1 discloses an air supply device with exhaust, supply and cooker hood air channels.

### OBJECTIVE

The objective of the present invention is to provide an air supply device, which may be connected to a building with a cooker hood air duct, and to a building without the cooker hood air duct.

### SUMMARY

The present invention provides an air supply device for extracting exhaust air from a room and leading fresh supply air into the room comprising a casing, forming an outer layer of the air supply device, and a body, made of elastic material, arranged inside the casing. The air supply device further comprises an exhaust air channel arranged inside the body for extracting the exhaust air from the room, a supply air channel arranged inside the body for leading the supply air into the room, and a cooker hood air channel for extracting cooker hood air from the room; and a heat transfer unit is arranged inside the lower part of the body and within the exhaust air channel and the supply air channel to transfer thermal energy between exhaust and supply air. The air supply device comprises a cooker hood air inlet connected to the cooker hood air channel for conducting cooker hood air into the air supply device, which cooker hood air inlet is closed with a cap that is integral with the cooker hood inlet.

In an embodiment of the invention, the cap is arranged to be cut off before installing the air supply device. In an embodiment of the invention, the cooker hood air inlet comprises a cutting line for indicating where the cap is arranged to be cut off. Thus, the person installing the air supply device does not have to guess where to cut.

In an embodiment of the invention, the cutting line is marked by paint.

In an embodiment of the invention, the cutting line is marked by engraving.

In an embodiment of the invention, the cooker hood air channel is connected to the exhaust air channel.

In an embodiment of the invention, there is an opening between the cooker hood air channel and the exhaust air channel.

In an embodiment of the invention, the cooker hood air inlet is a protrusion from the body, which cooker hood air inlet is arranged to extend through the casing.

In an embodiment of the invention, the elastic material is expanded polypropylene (EPP). EPP has good thermal insulation properties and its elasticity is suitable for squeezing parts made of EPP together. It is also light material and, therefore, the weight of the body parts is lower than in air supply devices with metal parts. The elastic material of the body may also be expanded polystyrene (EPS) but EPP is more elastic and less brittle.

In an embodiment of the invention, the air supply device comprises an upper surface of having a supply air inlet and a supply air outlet, an exhaust air inlet and an exhaust air outlet, and the cap is arranged to be cut off at the same horizontal level as the upper surfaces of the other inlets and outlets are.

In an embodiment of the invention, the supply air inlet and a supply air outlet, an exhaust air inlet and an exhaust air outlet, and the cooker hood air inlet are integral parts of the body.

In an embodiment of the invention, the cutting line is at the same horizontal level as the uppermost surfaces of the other inlets and outlets.

In an embodiment of the invention, the cooker hood air inlet is located between the supply air inlet and the supply air outlet.

In an embodiment of the invention, the cooker hood air inlet is located between the exhaust air inlet and the exhaust air outlet.

In the invention, due to its arrangement the heat transfer unit may be fixed or replaced by removing the lower part only from the air supply device. Also the heat transfer unit may be installed inside the lower part before the lower part is brought to the installation plant.

In an embodiment of the invention, the heat transfer unit comprises a rotating heat transfer element.

Various aspects and embodiments of the air supply device described above may be used in any combination with each other.

### BRIEF DESCRIPTION OF THE DRAWINGS

The accompanying drawings, which are included to provide a further understanding of the air supply device and which constitute a part of this specification, illustrate embodiments of the air supply device and together with the description help to explain the principles of the invention. In the drawings:
**Fig. 1** shows an exploded view of an air supply device according to a first embodiment,
**Fig. 2** shows an exploded view of an upper part of the air supply device according to a first embodiment, and
**Fig. 3** shows the external casing of the air supply device of Fig. 1,
**Fig. 4** shows the external casing of the air supply device of Fig. 1 while the cap is cut off, and
**Fig. 5** shows the external casing of the air supply device of Fig. 1 wherein the cap has been cut off.

### DETAILED DESCRIPTION

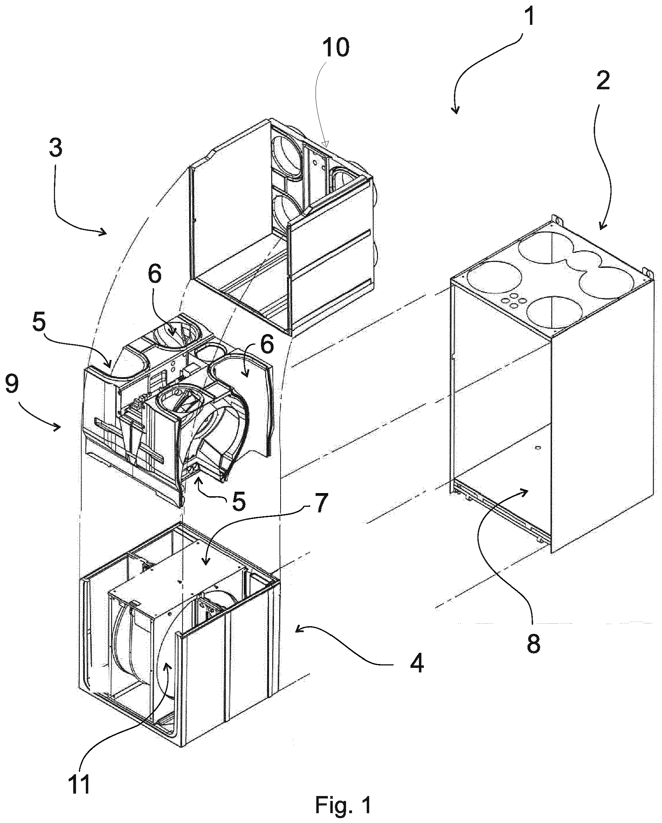

Figure 1 shows an air supply device 1 having components ready to be assembled together. The air supply unit comprises a casing 2 further comprising a separate bottom sheet 8. Inside the casing 2, the air supply device 1 comprises a body which comprises two parts, an upper part 3 and a lower part 4 where the body and thus both of the upper part 3 and the lower part 4 are made of elastic material. The body further comprises an exhaust air channel 5 and a supply air channel 6. The exhaust air channel 5 is arranged to receive exhaust air from a room into the air supply device and conduct the exhaust air out of the air supply device and further out of the building, and the supply air channel is arranged to receive fresh supply air into the air supply device and conduct the supply air further out of the air supply device into the room. The exhaust air channel 5 and the supply air channel 6 run inside the air supply device 1 in parallel and forms a shape of U so that the each exhaust air channel 5 and the supply air channel 6 comprise two vertical portions and a horizontal portion between the vertical portions. The exhaust air and the supply air inside the respective channels flow in opposite directions. The upper part 3 further comprises a frame 10 and an internal part 9, which internal part 9 is arranged to be installed inside the frame 10.

According to one embodiment, the lower part 4 comprises a heat transfer unit 7 as illustrated in figure 1.

According to one embodiment, the heat transfer unit 7 comprises a rotating heat transfer element 11. In figure 1 the rotating heat transfer element 11 is arranged to rotate in vertical position around a horizontal axis, and to transfer thermal energy from one air flow into the other.

According to one embodiment, the rotating heat transfer element 11 is arranged to rotate in horizontal position around a vertical axis and to transfer thermal energy from one air flow into the other.

According to one embodiment, the heat transfer unit 7 is arranged within the horizontal portions of the exhaust air channel 5 and the supply air channel 6.

As illustrated in figure 1, the upper part 3 (with all the components inside) is installed on top of the lower part 4. Thereafter the body with the upper and lower part on top of each other is installed inside the casing 2 e.g. by sliding the body into the casing 2 through a front door opening of the casing 2. Alternatively the lower part 4 is slid into the casing 2 first and the upper part 3 is thereafter carefully slid onto the lower part 4.

According to one embodiment, the inner part 9 is made of the same elastic material as the body. The inner part 9 forms part of the exhaust air channel 5 and part of the supply air channel 6 inside the upper part 3.

According to one embodiment, the frame 10 is made of the same elastic material as the body.

According to one embodiment, the elastic material is expanded polypropylene (EPP). EPP has good thermal insulation properties and its elasticity is suitable for squeezing parts made of EPP together. It is also light material and, therefore, the weight of the body parts is lower than in air supply devices with metal parts.

According to one embodiment, the elastic material is expanded polystyrene (EPS).

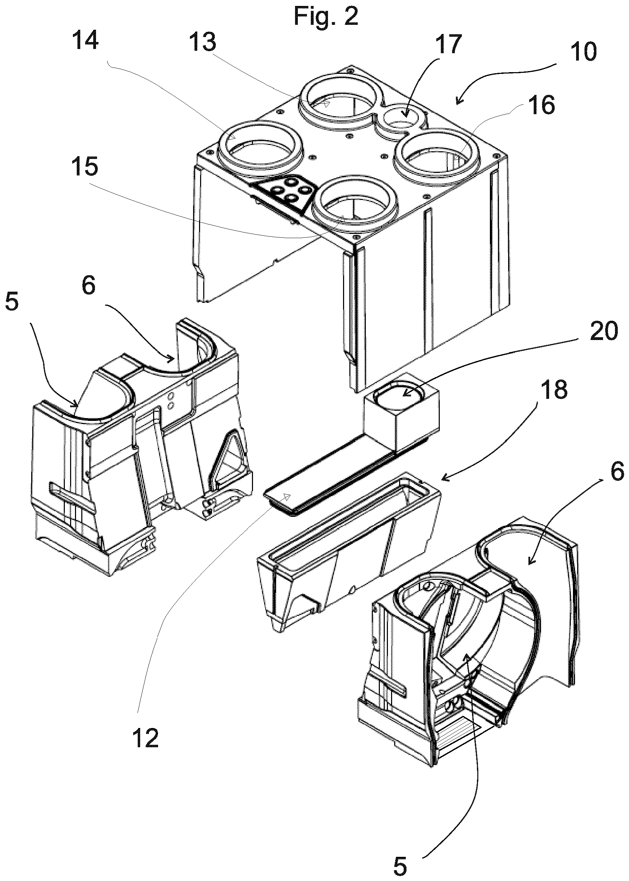

Figure 2 shows an exploded view of the upper part 3 of the air supply device 1 according to one embodiment. The internal part 9 comprises two part, a first half and a second half. Between these two parts, there is a cooker hood air channel 18, which is connected to the exhaust air channel 5 so that the cooker hood air may be conducted into the exhaust air channel 5. The cooker hood air channel 18 comprises a cooker hood air channel opening 20 for conducting the cooker hood air into the cooker hood air channel 18.

The internal par 9 is arranged inside the frame 10. The frame 10 comprises a supply air outlet 13 and a supply air inlet 16, which are connected to the supply air channel 5. The frame also comprises an exhaust air inlet 14 and an exhaust air outlet 15, which are connected to the exhaust air channel 5. The frame 10 further comprises a cooker hood air inlet 17, which is connected to the cooker hood air channel 18.

According to one embodiment, the cooker hood air inlet 17 is connected to the cooker hood air channel opening 20.

According to one embodiment, the internal part 9 is made of one piece and the cooker hood air channel 18 is a part of the internal part 9.

According to one embodiment, the cooker hood air channel 18 comprises a removable lid 12 for covering the cooker hood channel 18, and the removable lid 12 comprises the cooker hood air opening 20.

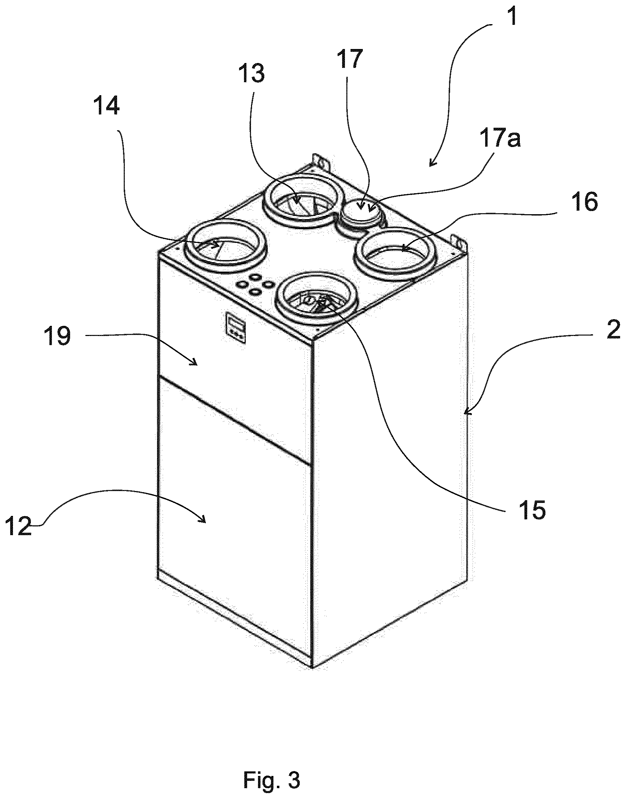

Figure 3 shows an air supply device 1 seen from outside its casing 2. In figure 3, the casing 2 comprises a wall 19 comprising a hatch or front door 12, which may be opened for maintenance. The casing 2 comprises openings for the supply air outlet 13, the exhaust air inlet 14, the exhaust air outlet 15 and the supply air inlet 16, which extend through the casing 2. The order of the inlets and outlets may differ in some embodiments. For example the supply air inlet 16 and outlet 13 may be closer to the wall 19 comprising the front door 12, and the exhaust air inlet 14 and outlet 15 may be farther from the wall comprising the front door 12.

In figure 3, the air supply device 1 comprises the cooker hood air inlet 17 for cooker hood exhaust air. The cooker hood air inlet 17, in figure 3, is made of same material as the body. By default, as in figure 3, the cooker hood air inlet 17 is closed with a cap 17a that is integral with the body when manufacturing the body.

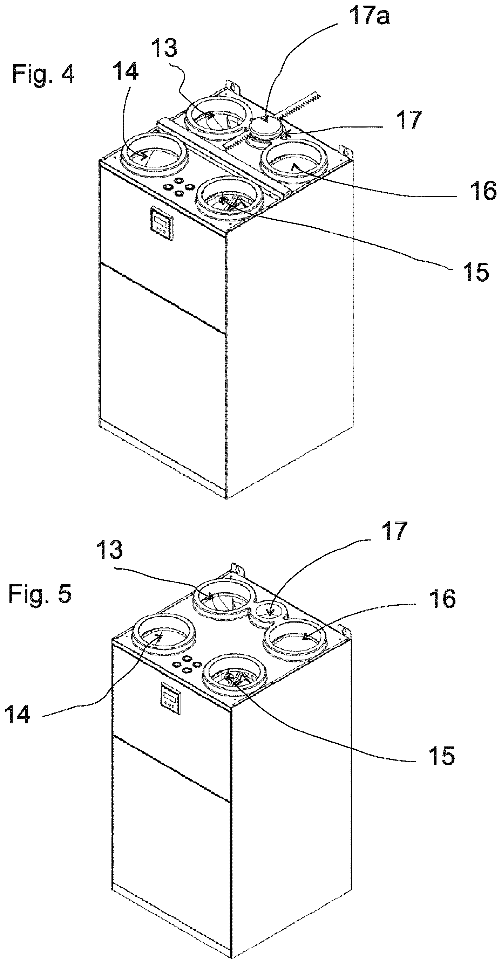

The cooker hood air inlet 17 may be opened at the installation site if the building comprises a duct for cooker hood exhaust air and the air supply device 1 is to be connected to it. This may be done by sawing the cap 17a with a saw or cutting the cap 17a with a knife as seen in figure 4. The elastic material, such as EPP, can easily be cut or sawed and thus removing the cap 17a can be done rather quickly.

According to one embodiment, the cooker hood air inlet 17 comprises a cutting line for indicating where the cap 17a is arranged to be cut off.

According to one embodiment, the cutting line is at the same horizontal level as the uppermost surfaces of the other inlets and outlets. This helps the person installing the air supply device 1 to define the cutting point in the cooker hood air inlet 17.

Figure 5 shows the same air supply device as in figure 4, but the cap 17a has been cut off and the cooker hood air inlet 17 is open and ready to receive the cooker hood air. As seen in figure 5, the cutting surface of the cooker hood inlet 17 is continuous surface with the uppermost surfaces of the inlet and outlet next to it.

As seen in figures, the same air supply device may be installed in various buildings regardless whether the building has a cooker hood air duct or not. If the building does not comprise the cooker hood air duct, the cap 17a is not cut off when installing the air supply device. And if the building does comprise the cooker hood air duct which is designed to be connected to the air supply device 1, the cap 17a is just cut off and the air supply device 1 is ready to be connected to the cooker hood air duct. By having only one air supply device option, the manufacturer needs fewer parts and, therefore, manufacturing costs are much lower. Also fewer different spare parts are needed.

Although the air supply device has been described in conjunction with the above embodiments, it should be understood that the air supply device is not limited to any particular embodiment of the above described embodiments. While the air supply device have been described in connection with a number of exemplary embodiments, and implementations, various modifications, and equivalent arrangements, which fall within the purview of prospective claims are intended to be covered the scope of the claims.

## Claims

1. An air supply device (1) for extracting exhaust air from a room and leading fresh supply air into the room comprising
- a casing (2), forming an outer layer of the air supply device (1),
- a body, made of elastic material, arranged inside the casing (2), wherein the body comprises an upper part (3) and a lower part (4),
- an exhaust air channel (5) arranged inside the body for extracting the exhaust air from the room,
- a supply air channel (6) arranged inside the body for leading the supply air into the room, and
- a cooker hood air channel (18) for extracting cooker hood air from the room,
**characterized in that**
a heat transfer unit (7) is arranged inside the lower part of the body and within the exhaust air channel (5) and the supply air channel (6) to transfer thermal energy between exhaust air, flowing in the exhaust air channel, and supply air, flowing in the supply air channel, and
the air supply device (1) comprises a cooker hood air inlet (17) connected to the cooker hood air channel (18) for conducting cooker hood air into the air supply device (1), wherein the cooker hood air inlet (17) is closed with a cap (17a) that is integral with cooker hood inlet (17).

2. An air supply device according to claim 1,
**characterized in that** the cap (17a) is cutta-ble for opening the cooker hood inlet.

3. An air supply device according to claim 2,
**characterized in that** the cooker hood air inlet (17) comprises a cutting line for indicating where the cap (17a) is arranged to be cut off.

4. An air supply device according to any of preceding claims,
**characterized in that** the cooker hood air channel (18) is connected to the exhaust air channel (5) .

5. An air supply device according to any of preceding claims,
**characterized in that** the cooker hood air inlet (17) is a protrusion from the body, which cooker hood air inlet (17) is arranged to extend through the casing (2).

6. An air supply device according to any of preceding claims,
**characterized in that** the elastic material is expanded polypropylene (EPP).

7. An air supply device according to any of claims 2 to 6,
**characterized in that** the air supply device comprises an upper surface having a supply air inlet (16) and a supply air outlet (13), an exhaust air inlet (14) and an exhaust air outlet (15), and the cooker hood air inlet (17), and the cap (17a) is arranged to be cut off at the same horizontal level as the upper surfaces of the other inlets and outlets are.

8. An air supply device according to claim 7,
**characterized in that** the supply air inlet (16) and a supply air outlet (13), an exhaust air inlet (14) and an exhaust air outlet (15), and the cooker hood air inlet (17) are integral parts of the body.

9. An air supply device according to claim 7 or 8, **characterized in that** the cooker hood air inlet (17) is located between the supply air inlet (16) and the supply air outlet (13).

10. An air supply device according to claim 7 or 8, **characterized in that** the cooker hood air inlet (17) is located between the exhaust air inlet (14) and the exhaust air outlet (15).

## Patentansprüche

1. Luftzufuhrvorrichtung (1) zum Absaugen von Abluft aus einem Raum und zum Einleiten von frischer Zuluft in den Raum, umfassend
- ein Gehäuse (2), das eine äußere Schicht der Luftzufuhrvorrichtung (1) bildet,
- einen Körper aus elastischem Material, der innerhalb des Gehäuses (2) angeordnet ist, wobei der Körper einen oberen Teil (3) und einen unteren Teil (4) umfasst,
- einen Abluftkanal (5), der im Inneren des Körpers angeordnet ist, zum Absaugen der Abluft aus dem Raum,
- einen Zuluftkanal (6), der im Inneren des Körpers angeordnet ist, zum Zuleiten der Zuluft in den Raum, und
- einen Dunstabzugshaubenluftkanal (18) zum Absaugen von Dunstabzugsluft aus dem Raum,
**dadurch gekennzeichnet, dass**
eine Wärmeübertragungseinheit (7) innerhalb des unteren Teils des Körpers und innerhalb des Abluftkanals (5) und des Zuluftkanals (6) angeordnet ist, um Wärmeenergie zwischen Abluft, die im Abluftkanal strömt, und Zuluft, die im Zuluftkanal strömt, zu übertragen, und
die Luftzufuhrvorrichtung (1) einen Dunstabzugshaubenlufteinlass (17) umfasst, der mit dem Dunstabzugshaubenluftkanal (18) verbunden ist, zum Zuleiten von Dunstabzugshaubenluft in die Luftzufuhrvorrichtung (1), wobei der Dunstabzugshaubenlufteinlass (17) mit einer Kappe (17a) verschlossen ist, die mit dem Dunstabzugshaubeneinlass (17) einteilig ist.

2. Luftzufuhrvorrichtung nach Anspruch 1, **dadurch gekennzeichnet, dass** die Kappe (17a) zum Öffnen des Dunstabzugshaubeneinlasses aufschneidbar ist.

3. Luftzufuhrvorrichtung nach Anspruch 2, **dadurch gekennzeichnet, dass** der Dunstabzugshaubenlufteinlass (17) eine Schnittlinie umfasst, die anzeigt, wo die Kappe (17a) abgeschnitten werden kann.

4. Luftzufuhrvorrichtung nach einem der vorhergehenden Ansprüche, **dadurch gekennzeichnet, dass** der Dunstabzugshaubenluftkanal (18) mit dem Abluftkanal (5) verbunden ist.

5. Luftzufuhrvorrichtung nach einem der vorhergehenden Ansprüche, **dadurch gekennzeichnet, dass** der Dunstabzugshaubenlufteinlass (17) ein Vorsprung von dem Körper ist, wobei der Dunstabzugshaubenlufteinlass (17) so angeordnet ist, dass er sich durch das Gehäuse (2) erstreckt.

6. Luftzufuhrvorrichtung nach einem der vorangehenden Ansprüche, **dadurch gekennzeichnet, dass** das elastische Material expandiertes Polypropylen (EPP) ist.

7. Luftzufuhrvorrichtung nach einem der Ansprüche 2 bis 6, **dadurch gekennzeichnet, dass** die Luftzufuhrvorrichtung eine Oberseite aufweist, die einen Zulufteinlass (16) und einen Zuluftauslass (13), einen Ablufteinlass (14) und einen Abluftauslass (15) umfasst, und dass der Dunstabzugshaubenlufteinlass (17), und die Kappe (17a) so angeordnet ist, dass sie auf derselben horizontalen Ebene abgeschnitten werden kann wie die Oberseiten der anderen Ein-und Auslässe.

8. Luftzufuhrvorrichtung nach Anspruch 7, **dadurch gekennzeichnet, dass** der Zulufteinlass (16) und ein Zuluftauslass (13), ein Ablufteinlass (14) und ein Abluftauslass (15) und der Dunstabzugshaubenlufteinlass (17) integrale Bestandteile des Körpers sind.

9. Luftzufuhrvorrichtung nach Anspruch 7 oder 8, **dadurch gekennzeichnet, dass** der Dunstabzugshaubenlufteinlass (17) zwischen dem Zulufteinlass (16) und dem Zuluftauslass (13) angeordnet ist.

10. Luftzufuhrvorrichtung nach Anspruch 7 oder 8, **dadurch gekennzeichnet, dass** der Dunstabzugshaubenlufteinlass (17) zwischen dem Ablufteinlass (14) und dem Abluftauslass (15) angeordnet ist.

## Revendications

1. Dispositif d'alimentation en air (1) pour extraire de l'air d'évacuation depuis une pièce et amener de l'air d'alimentation frais dans la pièce comprenant
- une enveloppe (2), formant une couche extérieure du dispositif d'alimentation en air (1),
- un corps, constitué d'un matériau élastique, disposé à l'intérieur de l'enveloppe (2), le corps comprenant une partie supérieure (3) et une partie inférieure (4),
- un canal d'air d'évacuation (5) disposé à l'intérieur du corps pour extraire l'air d'évacuation depuis la pièce,
- un canal d'air d'alimentation (6) agencé à l'intérieur du corps pour amener l'air d'alimentation dans la pièce, et
- un canal d'air de hotte aspirante (18) pour extraire de l'air de hotte aspirante depuis la pièce,
**caractérisé en ce que**
une unité de transfert de chaleur (7) est agencée à l'intérieur de la partie inférieure du corps et à l'intérieur du canal d'air d'évacuation (5) et du canal d'air d'alimentation (6) pour transférer de l'énergie thermique entre l'air d'évacuation, circulant dans le canal d'air d'évacuation, et l'air d'alimentation, circulant dans le canal d'air d'alimentation, et
le dispositif d'alimentation en air (1) comprend une entrée d'air de hotte aspirante (17) reliée au canal d'air de hotte aspirante (18) pour conduire l'air de hotte aspirante dans le dispositif d'alimentation en air (1), dans lequel l'entrée d'air de hotte aspirante (17) est fermée par un capuchon (17a) qui est d'un seul tenant avec l'entrée de hotte aspirante (17).

2. Dispositif d'alimentation en air selon la revendication 1,
**caractérisé en ce que** le capuchon (17a) peut être coupé pour ouvrir l'entrée de hotte aspirante.

3. Dispositif d'alimentation en air selon la revendication 2,
**caractérisé en ce que** l'entrée d'air de hotte aspirante (17) comprend une ligne de coupe pour indiquer où le capuchon (17a) est conçu pour être coupé.

4. Dispositif d'alimentation en air selon l'une quelconque des revendications précédentes,
**caractérisé en ce que** le canal d'air de hotte aspirante (18) est relié au canal d'air d'évacuation (5).

5. Dispositif d'alimentation en air selon l'une quelconque des revendications précédentes,
**caractérisé en ce que** l'entrée d'air de hotte aspirante (17) est une saillie depuis le corps, laquelle entrée d'air de hotte aspirante (17) est agencée pour s'étendre à travers l'enveloppe (2).

6. Dispositif d'alimentation en air selon l'une quelconque des revendications précédentes,
**caractérisé en ce que** le matériau élastique est du polypropylène expansé (PPE).

7. Dispositif d'alimentation en air selon l'une quelconque des revendications 2 à 6,
**caractérisé en ce que** le dispositif d'alimentation en air comprend une surface supérieure ayant une entrée d'air d'alimentation (16) et une sortie d'air d'alimentation (13), une entrée d'air d'évacuation (14) et une sortie d'air d'évacuation (15), et l'entrée d'air de hotte aspirante (17), et le capuchon (17a) est conçu pour être coupé au même niveau horizontal auquel se trouvent les surfaces supérieures des autres entrées et sorties.

8. Dispositif d'alimentation en air selon la revendication 7,
**caractérisé en ce que** l'entrée d'air d'alimentation (16) et une sortie d'air d'alimentation (13), une entrée d'air d'évacuation (14) et une sortie d'air d'évacuation (15), et l'entrée d'air de hotte aspirante (17) sont des parties intégrantes du corps.

9. Dispositif d'alimentation en air selon la revendication 7 ou 8,
**caractérisé en ce que** l'entrée d'air de hotte aspirante (17) est située entre l'entrée d'air d'alimentation (16) et la sortie d'air d'alimentation (13).

10. Dispositif d'alimentation en air selon la revendication 7 ou 8,
**caractérisé en ce que** l'entrée d'air de hotte aspirante (17) est située entre l'entrée d'air d'évacuation (14) et la sortie d'air d'évacuation (15).
